# EUROPÄISCHE PATENTANMELDUNG

(11) **EP 2 743 024 A1**
(43) Veröffentlichungstag der Anmeldung: **18.06.2014**
(21) Anmeldenummer: 12196571.9
(22) Anmeldetag: 11.12.2012
(51) Int. Cl.: B23K 9/00, F01L 3/04, F01L 3/20, B23K 9/04, B23K 35/30

(54) **Verfahren zur Herstellung eines Gaswechselventils, sowie Gaswechselventil**

(71) Anmelder: Wärtsilä Schweiz AG, 8401 Winterthur (CH)
(72) Erfinder: Häntzka, Torsten, 8200 Schaffhausen (CH); Schlager, Dietmar, Dr., 8408 Winterthur (CH)
(74) Vertreter: Intellectual Property Services GmbH

(57) **Zusammenfassung**

Die Erfindung betrifft ein Verfahren zur Herstellung eines Gaswechselventils (1')für eine Hubkolbenbrennkraftmaschine, insbesondere Auslassventil für einen längsgespülten Zweitakt-Grossdieselmotor, bei welchem Verfahren ein Ventilkörper bereitgestellt wird, umfassend einen sich entlang einer axialen Ventilschaftachse (A') erstreckenden Ventilschaft (2'), sowie einen sich an den Ventilschaft anschliessenden Ventilteller (3'), der sich in axialer Richtung vom Ventilschaft weg, und in Bezug auf die Ventilschaftachse (A') radial erweiternd nach aussen erstreckt. Dabei ist zwischen einer im wesentlichen orthogonal zur Ventilschaftachse (A') ausgebildeten Fussfläche (31') des Ventiltellers und dem Ventilschaft, eine Ventilsitzfläche (32') am Ventilteller (3') ausgebildet, wobei auf einem vorgebbaren Bereich der Fussfläche des Ventiltellers eine Korrosionsschutzbeschichtung (5', 51', 52') vorgesehen wird. Erfindungsgemäss wird die Korrosionsschutzbeschichtung mittels eines Metall-Schutzgasschweissverfahrens aufgeschweisst. Des weiteren betrifft die Erfindung ein nach dem erfindungsgemässen Verfahren hergestelltes Gaswechselventil.

## Beschreibung

Die Erfindung betrifft ein Verfahren zur Herstellung eines Gaswechselventils für eine Hubkolbenbrennkraftmaschine, insbesondere Verfahren zur Herstellung eines Auslassventil für einen längsgespülten Zweitakt-Grossdieselmotor, sowie ein Gaswechselventil gemäss dem Oberbegriff des unabhängigen Anspruchs der jeweiligen Kategorie.

Schutzschichten gegen Hochtemperaturkorrosion, häufig auch einfach als Heisskorrosion oder Heissgaskorrosion bezeichnet, sind im Stand der Technik wohlbekannt. Man versteht darunter zum Beispiel Oberflächenschutzschichten, die einen hohen Widerstand gegen Korrosion, insbesondere gegen Oxidation oder Sulfidation bei hohen Temperaturen und in chemisch aggressiven Umgebungen bieten. Sie werden beispielsweise durch thermisches Spritzen hergestellt, wobei MCrAIY-Schichten als Hochtemperaturkorrosionsschutz weit verbreitet sind. Das Metall M kann dabei z.B. Eisen, Kobalt oder Nickel oder eine Legierung dieser oder anderer Metalle sein. Auch Aluminium-Chrom-Schichten, die zum Beispiel durch Chromalitieren gebildet werden, zeigen in vielen Anwendungen eine mehr oder weniger gute Beständigkeit gegen Hochtemperaturkorrosion, insbesondere in sulfathaltigen Medien.

Das Phänomen der Hochtemperaturkorrosion kann dabei überall dort auftreten, wo relativ hohe Prozesstemperaturen von einigen 100°C bis weit über 1000°C herrschen, wobei häufig nicht nur die hohen Temperaturen als solches für das Auftreten korrosiver Effekte verantwortlich sind, sondern auch chemisch aggressive Umgebungsbedingungen anzutreffen sind, die zum Beispiel auf Verbrennungsprodukte oder andere chemische Reaktionsprodukte zurückzuführen sind oder auch von Beimischungen in Brennstoffen, Schmiermitteln usw. hervorgerufen werden können.

Somit sind besonders Werkstücke, Bauteile und Maschinenkomponenten, die in mehr oder weniger direktem Kontakt mit Verbrennungsvorgängen stehen, von Hochtemperaturkorrosion bedroht. Beispiele hierfür sind Kolbenoberflächen von Kolben in Brennkraftmaschinen, Zylinderwände, Zylinderdeckel, Einspritzdüsen, Gaswechselventile, aber auch die Komponenten der Abgassysteme von Brennkraftmaschinen, wie zum Beispiel Turbolader, insbesondere auch Turbinenteile und / oder die Abgas Zu- oder Abführung von Abgas- und Turbolader-Systemen.

Auslassventile von Grossdiesel Verbrennungsmotoren bestehen dabei oft aus Nickelbasislegierungen (Superlegierungen) z. B. Nimonic 80 A mit entsprechend hohem Chromgehalt (ca. 18-21 %) und niedrigem Eisengehalt (max. 3%) hergestellt, welche eine geeignete Korrosionsbeständigkeit gegenüber den aggressiven Medien aufweisen, die bei der Verbrennung von Schweröl auftreten. Eine kostengünstigere Variante im Vergleich zu Nickelbasislegierungen ist die Verwendung korrosionsbeständiger Chrom-Nickel-Stähle zur Herstellung der Ventilkörper, deren korrosionsrelevanten Eigenschaften jedoch nicht an die von Nickelbasislegierungen reichen. Um die entsprechenden Eigenschaften dieser Stähle den Anforderungen entsprechend anzupassen ist es bekannt, diese insbesondere im korrosionsgefährdeten Bereich des Gaswechselventils mehrlagig mittels Auftragsschweissen beispielweise in ca. 6 bis 9 Lagen aufzuschweissen. Die Korrosionsbeständigkeit der auftragsgeschweissten Schutzschicht, besonders gegenüber Angriffen durch Brennstoffaschen bei der Verbrennung von Schweröl ist hauptsächlich vom Chrom- und Eisengehalt abhängig. Der Chromgehalt sollte hierbei möglichst hoch (>20 %) und der Eisengehalt möglichst gering (max. 3 %) sein. Der maximale Eisengehalt von 3 % entspricht ebenfalls dem maximalen Eisengehalt von Nimonic 80A.

Stand der Technik ist die mechanisierte Verschweissung von Nickelbasislegierungen mit Chromgehalten von 20 - 23 %, dabei erreicht man diesen Chromgehalt infolge der Aufmischung nur durch mehrlagiges Schweissen.

Unter Aufmischung beim Auftragschweissen versteht der Fachmann dabei das Eindringen von bestimmten chemischen Elementen aus dem Substrat in die aufgeschweisste Schicht. Beim Auftragsschweissen wird nämlich die Oberfläche des Substrats, auf die aufgeschweisst wird, natürlich mehr oder weniger stark erwärmt und kann sogar an- bzw. in einem bestimmten Oberflächenbereich aufschmelzen, so dass sich das aufgeschmolzene Material des Substrats mit dem aufgeschweissten Material vermischen kann, oder es können natürlich auch Diffusionsprozesse massgeblich für die Vermischung von Substratmaterial und aufgeschweisstem Material, also für die Aufmischung verantwortlich sein.

Will man also äussere Schichten, die den korrosiven Angriffen mehr oder weniger direkt ausgesetzt sind, mit möglichst geringer Aufmischung herstellen, ist es bekannt die Korrosionsschutzschicht in mehreren Lagen nacheinander aufzuschweissen, so dass die äusseren Schichten möglichst wenig mit Material aus dem Substrat kontaminiert sind, die Aufmischung in den äusseren Schichten also möglichst gering ist.

Um eine deutlich bessere Korrosionsbeständigkeit zu erhalten, muss der Chromgehalt dabei auf über 40 % erhöht werden. Legierungen mit einem solch hohen Chromgehalt sind aber infolge der starken Heissrissneigung nicht schweissbar, bzw. nur unter Verwendung geringster Wärmeeinträge wie beim E-Handschweissen mit dünnen Elektroden der unteren Leistungsgrenze, dem WIG Schweissen mit Schweissdrahtdurchmessern von 0,8 bis 1,0mm und dem Laserschweissen mit Pulver. Beim Prozess E-Handschweissen und beim WIG Schweissen ist infolge der Aufmischung der hohe Chromgehalt nur durch mehrlagiges Schweissen erzielbar. Darüber hinaus besteht auch bei diesen Verfahren ein hohes Risiko von Heissrissbildung im Schweissgut und rissfreie Schweisslagen können nicht garantiert werden, auch wenn sie unter Laborbedingungen unter erheblichem technischem Aufwand im Prinzip erreicht werden können. Der geforderte geringe Eisenteil der Auftragsschicht wird ebenso nicht erreicht und beträgt üblicherweise mindestens 5%. Insbesondere mit dem Laserschweissen können darüber hinaus Auftragsschweissungen von mehreren Millimetern Schichtdicke nicht wirtschaftlich geschweisst werden.

Ein weiterer wesentlicher Nachteil im Stand der Technik besteht darin, dass die durch das Aufschweissen eingebrachte Wärme zu starken Eigenspannungen im Ventilkörper und zu Bauteilverzug führt und damit das Risiko von Rissbildung im Ventilkörper erhöht wird.

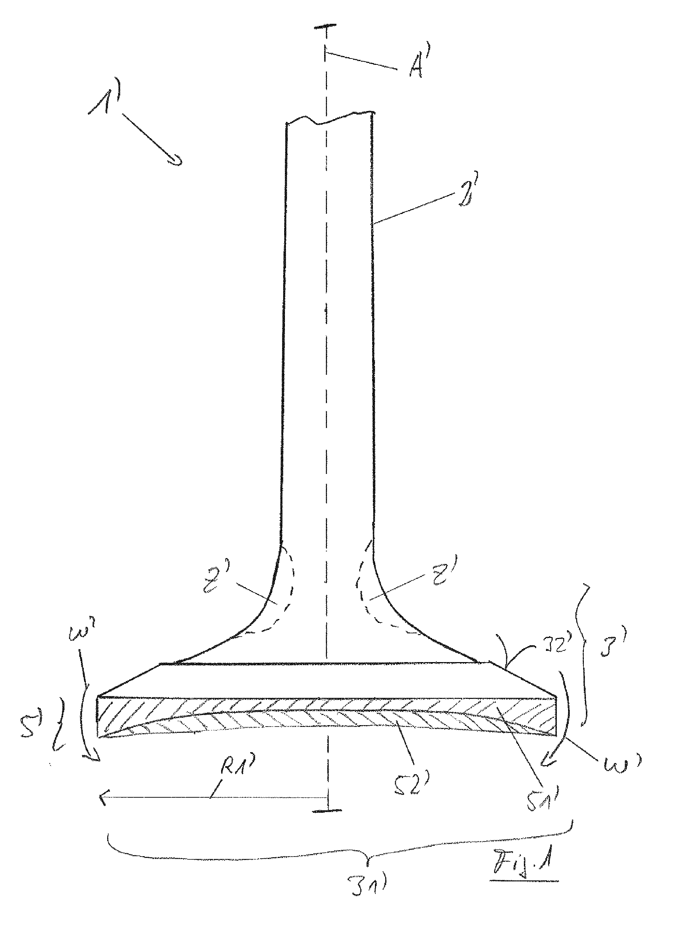

Diese aus dem Stand der Technik wohl bekannte Problematik soll im Folgenden anhand der schematischen Fig. 1 kurz erläutert werden.

Fig. 1 zeigt in schematischer Darstellung ein aus dem Stand der Technik wohlbekanntes Auslassventil eines längsgespülten Zweitakt-Grossdieselmotors.

Das Auslassventil 1' der Fig. 1 umfasst einen Ventilkörper mit einem sich entlang einer axialen Ventilschaftachse A' erstreckenden Ventilschaft 2', sowie einen sich an den Ventilschaft 2' anschliessenden Ventilteller 3', der sich in axialer Richtung vom Ventilschaft 2' weg, und in Bezug auf die Ventilschaftachse A' radial erweiternd nach aussen erstreckt. Dabei ist zwischen einer im Wesentlichen orthogonal zur Ventilschaftachse A' ausgebildeten Fussfläche 31' des Ventiltellers 3' und dem Ventilschaft 2' eine Ventilsitzfläche 32' am Ventilteller 3' ausgebildet.

An der Fussfläche 31' des Ventiltellers 3', die im Einbauzustand der Oberfläche des im Zylinder des Grossdielmotors laufenden Kolbens zugewandt ist, ist zum Schutz der Fussfläche 31' gegen die aggressiven thermischen, chemischen und physikalischen Belastungen, die aufgrund der Verbrennungsvorgänge im Zylinder im Betriebszustand direkt auf die Fussfläche 31' einwirken, eine Korrosionsschutzbeschichtung 5' in Form von aufeinander aufgeschweissten Korrosionsschutzschichten 51', 52' vorgesehen. Die Korrosionsschutzbeschichtung 5' des Auslassventils 1' der Fig. 1 ist dabei über den gesamten Radius R1' der Fussfläche 31' ausgedehnt.

Die auf die Fussfläche 31' mehrlagig aufgeschweisste Korrosionsschutzbeschichtung 5' hat dabei in der Praxis häufig ca. 6 bis 9 Lagen, die nacheinander aufgeschweisst werden, wobei aus Gründen der Übersichtlichkeit in Fig. 1 nur zwei Lagen, nämlich die beiden Korrosionsschutzschichten 51', 52' dargestellt sind. Die durch das Aufschweissen eingebrachte Wärme führt dabei zu starken Eigenspannungen Z' im Ventilkörper, insbesondere aber nicht nur an den in Fig. 1 mit Z' bezeichneten Bereichen am Ventilteller 3'. Diese führen beim Aufschweissen zu einem Bauteilverzug W', wie durch die Pfeile W' in Fig. 1 angedeutet ist, wodurch insbesondere das Risiko von Rissbildung im Ventilkörper massiv erhöht wird. Darüber hinaus steigt das Risiko der Bildung von Heiss- und Wiederaufschmelzungsrissen innerhalb der Auftragsschweissung mit der eingebrachten Wärme.

In Folge des Bauteilverzugs W' wölbt sich der Ventilteller 3' infolge des mehrlagigen Schweissens derartig stark in Richtung vom Ventilschaft 2' weg, dass das Schweissen einer zusätzlichen Lage einer Korrosionsschutzschicht 52' im Zentrum des Ventiltellers 3' als Bearbeitungsaufmass notwendig wird, um den Bauteilverzug W' wieder auszugleichen, so dass wieder eine einigermassen ebene Oberfläche an der Fussfläche 31' gewährleistet ist.

Dabei ist anzumerken, dass das Schweissen jeder weiteren Lage das Risiko der Heiss- und Wiederaufschmelzungsrissbildung erhöht und zu weiterem Bauteilverzug W' führen kann. Des Weiteren entstehen, wie bereits angedeutet, durch die eingebrachte Schweisswärme Zugeigenspannungen Z', vor allem im kritischen Bereich am Übergang des Ventilschaft 2' auf den Ventilteller 3'. Die mechanischen Belastungen im Auslassventil 1' sind hier beachtlich und die Zugeigenspannungen Z' begünstigen die Rissbildung.

Aufgabe der Erfindung ist daher, die Vermeidung bzw. eine massive Reduzierung des Bauteilverzugs beim Auftragschweissen und der damit verbunden Zugeigenspannung im Ventilkörper, insbesondere in den kritischen Bereichen, dort wo der Ventilschaft in den Ventilteller übergeht, und die damit einhergehenden Rissbildungen in der geschweissten Korrosionsschutzschicht zu vermeiden.

Die diese Aufgaben lösenden Gegenstände der Erfindung sind durch die Merkmale der unabhängigen Ansprüche gekennzeichnet.

Die abhängigen Ansprüche beziehen sich auf besonders vorteilhafte Ausführungsformen der Erfindung.

Die Erfindung betrifft somit ein Gaswechselventil, sowie ein Verfahren zur Herstellung eines Gaswechselventils für eine Hubkolbenbrennkraftmaschine, insbesondere Auslassventil für einen längsgespülten Zweitakt-Grossdieselmotor, bei welchem Verfahren ein Ventilkörper bereitgestellt wird, umfassend einen sich entlang einer axialen Ventilschaftachse erstreckenden Ventilschaft, sowie einen sich an den Ventilschaft anschliessenden Ventilteller, der sich in axialer Richtung vom Ventilschaft weg, und in Bezug auf die Ventilschaftachse radial erweiternd nach aussen erstreckt. Dabei ist zwischen einer im wesentlichen orthogonal zur Ventilschaftachse ausgebildeten Fussfläche des Ventiltellers und dem Ventilschaft eine Ventilsitzfläche am Ventilteller ausgebildet, und auf einem vorgebbaren Bereich der Fussfläche des Ventiltellers wird eine Korrosionsschutzbeschichtung vorgesehen. Erfindungsgemäss wird die Korrosionsschutzbeschichtung mittels eines Metall-Schutzgasschweissverfahrens aufgeschweisst.

Durch die Verwendung eines Metall-Schutzgasschweissverfahrens, insbesondere mechanisiertes MSG-Schweissen (Metall-Schutzgasschweissen), ist es erstmals möglich, Korrosionsschutzschichten hoch chromhaltiger Nickelbasiswerkstoffe mit sehr geringer Aufmischung auf Gaswechselventile aufzuschweissen.

Durch die vorliegende Erfindung wird daher das rissfreie, mechanisierte bzw. voll mechanisierte MSG-Auftragsschweissen von Nickelbasislegierung mit Chromgehalten grösser 40 % und geringster Aufmischung unter Verwendung eines Standarddrahtdurchmessers, bevorzugt z.B. 1,2 mm Drahtdurchmesser erstmals ermöglicht. Auch andere Drahtdurchmesser sind dabei bei entsprechender Parametereinstellung ebenfalls rissfrei verschweissbar. Somit sind hochkorrosionsbeständige Schichten mit Chromgehalten von mindestens 40 % und Eisengehalten unter 5%, in der Praxis sogar unter 3 % mit nur einlagigem Schweissen erzielbar. D.h., durch die vorliegende Erfindung ist es erstmals möglich, einen ausreichenden Korrosionsschutz durch Aufschweissen einer einzigen Lage zu erzielen, weil das erfindungsgemässe Verfahren eine genügend geringe Aufmischung garantiert. Dabei können selbstverständlich in speziellen Fällen auch mehrlagige Schichten mit dem erfindungsgemässen Schweissverfahren hergestellt werden. Unter Verwendung der Mehrlagentechnik kann die chemische Zusammensetzung sogar nahezu dem des verwendeten Zusatzwerkstoffes entsprechen, und Chromgehalte grösser 43% und Eisengehalten kleiner 3% können somit in einer erfindungsgemäss aufgeschweissten Korrosionsschutzschicht erreicht werden.

Die Erfindung betrifft somit ein beanspruchungsgerechtes Aufbringen einer hoch korrosionsbeständigen Schicht durch Schweissen mit reduziertem Wärmeeintragung. Der reduzierte Wärmeeintrag wird dabei erfindungsgemäss dadurch erreicht, dass ein Metall-Schutzgasschweissverfahren zum Aufschweissen der Korrosionsschutzschicht verwendet wird. Als besonders geeignet hat sich dabei ein Metall-Schutzgasschweissverfahren mit mechanisch gepulstem Schweissdraht erwiesen, da bei diesem der Energieeintrag nicht kontinuierlich sondern gepulst erfolgt, was die positive Wirkung hat, dass das Aufschweissen als solches während eines Energiepulses mit genügend hoher Wärmeenergie erfolgt, während die im Mittel in das Werkstück eingebrachte Wärme gleichzeitig im Vergleich zum Stand der Technik deutlich reduziert ist, so dass die schädliche Aufmischung massiv reduziert wird und die Vermeidung bzw. eine massive Reduzierung des Bauteilverzugs beim Auftragschweissen und der damit verbunden Zugeigenspannung im Ventilkörper, insbesondere in den kritischen Bereichen, dort wo der Ventilschaft in den Ventilteller übergeht, und die damit einhergehenden Rissbildungen in der geschweissten Korrosionsschutzschicht bei Anwendung des erfindungsgemässen Verfahrens vermieden wird.

Dabei ist ein gepulstes MSG Schweissverfahren bekannt, wobei der Drahtvorschub kontinuierlich erfolgt und der Materialübergang des Schweissguts in Tropfenform durch Spannungsimpulse erfolgt. Beim CMT Schweissverfahren ist der Drahtvorschub mechanisch gepulst und der Tropfenübergang erfolgt im Kurzschluss durch Zurückziehen des Schweissdrahts und Reduzierung des Schweissstromes, wodurch der Wärmeeintrag reduziert wird.

Dabei ist das Metall-Schutzgasschweissen eine an sich im Stand der Technik bekannte Schweissmethode, dessen Prinzip nur zur Klarstellung im Folgenden kurz umrissen wird. Das Metall-Schutzgasschweissen, das häufig einfach als MSG abgekürzt wird, ist in seinen verschiedenen Varianten auch z.B. als Metallschweißen mit inerten Gasen als MIG-Schweissen oder auch als MAG-Schweißen, also Metallschweissen mit aktiven reaktionsfähigen Gasen bekannt und ist vom Grundprinzip her ein Lichtbogenschweissverfahren, bei dem ein abschmelzender Schweissdraht oft automatisch von einem Motor mit veränderbarer Geschwindigkeit kontinuierlich nachgeführt wird.

Dabei kann der Wärmeeintrag zum Aufschmelzen des Schweissdrahts kontinuierlich oder auch, wie oben bereits erläutert, gepulst erfolgen. Das mechanisch gepulste Metall-Schutzgasschweissverfahren ist dem Fachmann dabei wie erwähnt auch unter der Bezeichnung CMT-Verfahren bekannt.

Häufig verwendete Schweissdrahtdurchmesser liegen beispielweise zwischen 0,8 mm und 1,2 mm. Gleichzeitig mit dem Drahtvorschub wird der Schweissstelle über eine Düse das Schutz- oder Mischgas in einer vorgebbaren Menge zugeführt, die natürlich durch die konkrete Anwendung definiert wird. Das zugeführte Gas schützt unter anderem das flüssige Metall unter dem Lichtbogen vor chemischen Veränderungen, insbesondere vor Oxidation, welche die Schweissnaht schwächen würde. Dabei wird beim sogenannten Metallaktivgasschweissen (MAG) häufig entweder mit reinem CO₂ oder einem Mischgas aus Argon und geringen Anteilen von CO₂ und 0O₂ gearbeitet, wobei beim Metallinertgasschweissen (MIG) oft das Edelgas Argon, seltener auch das teure Edelgas Helium verwendet wird. Das MAG-Verfahren wird dabei in der Praxis in erster Linie bei Stählen eingesetzt, das MIG-Verfahren bevorzugt bei NE-Metallen.

Wahlweise können beim Metall-Schutzgasschweissen natürlich auch Fülldrähte eingesetzt werden. Diese können im Inneren mit einem Schlackebildner und ggf. Legierungszusätzen versehen sein. Sie dienen dem gleichen Zweck wie die Umhüllungen der Stabelektrode. Einerseits tragen die Inhaltsstoffe zum Schweissvolumen bei, andererseits bilden sie eine Schlacke und schützen die geschweisste Stelle vor Oxidation.

Dadurch, dass gemäss der vorliegenden Erfindung die Korrosionsschutzbeschichtung mittels eines Metall-Schutzgasschweissverfahrens mit reduziertem Wärmeeintrag auf die Fussfläche des Ventiltellers aufgeschweisst wird, kann ein Bauteilverzug beim Aufschweissen weitestgehend, in der Regel sogar in Bezug auf technisch relevante Massstäbe vollständig verhindert werden.

Bei einem bevorzugten Ausführungsbeispiel der vorliegenden Erfindung ist der Ventilkörper des Gaswechselventils aus einer Eisenbasislegierung mit hohem Chrom- und Nickelgehalt gebildet, wobei der Nickelgehalt bevorzugt zwischen 1 Gew.% und 40 Gew.% Nickel, im Speziellen zwischen 5 Gew.% und 20 Gew.% Nickel, besonders bevorzugt zwischen 8 Gew.% und 15 Gew.% Nickel, insbesondere bei 10% Gew.% Nickel liegt. Dabei kann der Chromgehalt des Ventilkörpers insbesondere zwischen 5 Gew.% und 60 Gew.% Chrom, im Speziellen zwischen 10 Gew.% und 50 Gew.% Chrom, besonders bevorzugt zwischen 15 Gew.% und 45 Gew.% Chrom liegen, und insbesondere bei 20% Chrom liegen. In der Praxis kann der Ventilkörper zusätzlich noch mindestens zwischen 0.1 Gew.% und 0.4 Gew.% Kohlenstoff, zwischen 0.01 Gew.% und 0.06 Gew.% Phosphor und zwischen 0.01 Gew.% und 0.05 Gew.% enthalten.

Die erfindungsgemäss aufgetragene Korrosionsschutzbeschichtung an sich kann dabei selbstverständlich aus jedem geeigneten Material zusammengesetzt sein und das zu verwendende Material kann je nach Anforderungen entsprechend vom Fachmann ausgewählt werden. Die Korrosionsschutzbeschichtung ist dabei jedoch bevorzugt aus einer Nickellegierung umfassend mindestens Nickel und Chrom gebildet, wobei der Chromgehalt bevorzugt zwischen 10 Gew.% und 60 Gew.% Chrom, im Speziellen zwischen 15 Gew.% und 50 Gew.% Chrom, besonders bevorzugt zwischen 20 Gew.% und 45 Gew.% Chrom, insbesondere bei 43% liegt. Dabei wird im Speziellen ein Eisengehalt der Korrosionsschutzbeschichtung kleiner als 5 Gew.%, bevorzugt zwischen 0.5 Gew.% und 4 Gew.%, im Speziellen kleiner als 3 Gew.% eingestellt.

Als Schutzgas wird beim Metall-Schutzgasschweissverfahren in an sich bekannter Weise eine Mischung aus einem Reaktivgas und einem Inertgas verwendet, wobei in einem speziellen Ausführungsbeispiel als Reaktivgas 0.5 Vol.% bis 10 Vol.% Wasserstoff, bevorzugt 1 Vol% bis 5 Vol.% Wasserstoff, insbesondere ca. 2 Vol.% Wasserstoff verwendet wird, als erstes Inertgas 5 Vol.% bis 60 Vol.% Helium, bevorzugt 20 Vol% bis 40 Vol.% Helium, insbesondere ca. 30 Vol.% Helium verwendet wird und als Rest zu 100 Vol.% Argon als zweites Inertgas verwendet wird.

Um einen möglichst geringen Gesamtwärmeeintrag einzustellen, wird das Metall-Schutzgasschweissverfahren besonders bevorzugt als gepulstes CMT Verfahren durchgeführt, wie es weiter oben bereits im Detail beschrieben wurde, wobei als Schweissdraht beim Metall-Schutzgasschweissverfahren in der Praxis ein Schweissdraht mit einem Drahtdurchmesser zwischen 1 mm und 2 mm, bevorzugt ca. 1.2 mm, bzw. 1.14 mm verwendet wird.

Dabei ist es selbstverständlich möglich, dass eine erfindungsgemäss aufgeschweisste Korrosionsschutzbeschichtung als mehrlagige, mindestens zweilagige Korrosionsschutzschicht umfassend eine erste Korrosionsschutzschicht und eine zweite Korrosionsschutzschicht aufgeschweisst wird, wobei die erste Korrosionsschutzschicht bevorzugt, aber nicht notwendig aus dem gleichen Material wie die zweite Korrosionsschutzschicht hergestellt wird.

Ebenso ist es möglich, dass in der Fussfläche des Ventiltellers eine Ausnehmung in Form einer ersten Beschichtungsmulde vorgesehen wird, in welcher eine Korrosionsschutzbeschichtung in Form einer ersten Korrosionsschutzschicht aufgeschweisst wird, wobei die Korrosionsschutzbeschichtung in einem anderen Ausführungsbeispiel auch mindestens eine zweite Korrosionsschutzschicht umfassen kann und die zweite Korrosionsschutzschicht in einer zweiten Beschichtungsmulde vorgesehen werden kann.

Dann, wenn zumindest eine erste und eine zweite Korrosionsschutzschicht, bevorzugt direkt übereinander auf der Fussfläche oder in der ersten Beschichtungsmulde bzw. in der zweiten Beschichtungsmulde der Fussfläche aufgeschweisst werden, kann pro Schweissvorgang die eingebrachte Schweisswärme noch weiter reduziert werden, was zusätzlich den aus dem Stand der Technik bekannten schädlichen Bauteilverzug reduziert bzw. im wesentlichen ganz verhindert. Eine weitere Reduzierung des gesamten Wärmeeintrags in den Ventilteller kann somit vorteilhaft dadurch erzielt werden, dass die Anzahl der Schweisslagen und der Schweissbereich reduziert werden.

Dabei hat sich gezeigt, dass sehr häufig die Korrosion an der Fussfläche des Ventiltellers beispielweise im Bereich bis ca. 2/3 des Durchmessers der Fussfläche des Ventiltellers am stärksten ist und bis ca. 3/4 des Durchmessers geringer ist als im vorgenannten inneren Bereich. Ausserdem kann es je nach Anwendungsbereich und Betriebsbedingungen des Motors möglich sein, dass zum Beispiel in einem von der zentralen Ventilschaftachse radial beabstandeten ringförmigen Bereich die Korrosionsbelastung am grössten ist, und radial innerhalb und radial ausserhalb des vorgenannten Ringbereichs die Korrosionsbelastung wieder abnimmt. Es versteht sich, dass die vorgenannten Angaben in der Praxis abweichende Werte oder Geometrien haben können und abhängig vom Motor, dessen Belastung usw. sein können.

Bei einem speziellen Ausführungsbeispiel der vorliegenden Erfindung ist daher eine äussere Begrenzungslinie der ersten Korrosionsschutzschicht kreisförmig mit einem äusseren Begrenzungsradius um die Ventilschaftachse ausgebildet, wobei zum Beispiel dann, wenn die Korrosionsbelastungen vorwiegend in einem kreisförmigen Bereich der Fussfläche, die auch häufig als Ventilunterseite bezeichnet wird, stattfinden, kann die erste Korrosionsschutzschicht auch kreisringartig mit einem vorgebaren inneren Begrenzungsradius um die Ventilschaftachse ausgebildet sein, oder im Prinzip auch jede andere geeignete Geometrie haben.

Um das Gaswechselventil zum Beispiel bei der Montage oder Demontage oder bei anderen Servicearbeiten besser handhaben zu können, kann in an sich bekannter Weise die erste Korrosionsschutzschicht und / oder die zweite Korrosionsschutzschicht um eine im Ventilteller vorgesehene Servicebohrung vorgesehen sein. In der Praxis kann die Servicebohrung z.B. ein Innengewinde aufweisen in welches eine Handlingvorrichtung zum bequemen Handling des Gaswechselventils verschraubbar ist. Es versteht, dass die Servicebohrung bevorzugt erst eingebracht wird, wenn die Korrosionsschutzbeschichtung bereits aufgeschweisst ist.

Es versteht sich dabei von selbst, dass die im Rahmen dieser Anmeldung beschriebenen speziellen Ausführungsbeispiele der vorliegenden Erfindung lediglich exemplarisch zu verstehen sind und die Erfindung selbstverständlich auch alle geeigneten Kombinationen der beschriebenen Ausführungsbeispiele, sowie jegliche, dem Fachmann naheliegenden Weiterbildungen der Erfindung vom beanspruchten Schutzumfang umfasst sind.

Gemäss der vorliegenden Erfindung wird somit für ein Gaswechselventil einer Brennkraftmaschine erstmals ein beanspruchungsgerechtes Aufbringen einer hoch korrosionsbeständigen Schicht durch Auftragsschweissen mit massiv reduziertem Wärmeeintrag vorgeschlagen. Je nach Korrosionsbeanspruchung können dabei z.B. äussere Bereiche, die um einen vorgebbaren Abstand, zum Beispiel mehr als 3/4 des Durchmessers der Fussfläche von der Ventilschaftachse entfernt sind, auch ohne Plattierung, also auch ohne aufgeschweisste Korrosionsschutzschicht ausgeführt werden. Das erfindungsgemäss ausgeführte Auftragsschweissen reduziert den Verzug auf ein Minimum oder sogar vollständig, so dass das Aufschweissen mehrerer Aufmasslagen zum Ausgleich des Bauteilverzugs an der Fussfläche, wie aus dem Stand der Technik bekannt, nicht mehr notwendig ist.

## Patentansprüche

1. Verfahren zur Herstellung eines Gaswechselventils für eine Hubkolbenbrennkraftmaschine, insbesondere Auslassventil für einen längsgespülten Zweitakt-Grossdieselmotor, bei welchem Verfahren ein Ventilkörper bereitgestellt wird, umfassend einen sich entlang einer axialen Ventilschaftachse erstreckenden Ventilschaft, sowie einen sich an den Ventilschaft anschliessenden Ventilteller, der sich in axialer Richtung vom Ventilschaft weg, und in Bezug auf die Ventilschaftachse radial erweiternd nach aussen erstreckt, wobei, zwischen einer im wesentlichen orthogonal zur Ventilschaftachse ausgebildeten Fussfläche des Ventiltellers und dem Ventilschaft, eine Ventilsitzfläche am Ventilteller ausgebildet ist, und auf einem vorgebbaren Bereich der Fussfläche des Ventiltellers eine Korrosionsschutzbeschichtung vorgesehen wird, **dadurch gekennzeichnet, dass** die Korrosionsschutzbeschichtung mittels eines Metall-Schutzgasschweissverfahrens aufgeschweisst wird.

2. Verfahren nach Anspruch 1, wobei der Ventilkörper aus einer Eisenbasislegierung mit hohem Chrom- und Nickelgehalt gebildet ist, wobei der Nickelgehalt bevorzugt zwischen 1 Gew.% und 40 Gew.% Nickel, im Speziellen zwischen 5 Gew.% und 20 Gew.% Nickel, besonders bevorzugt zwischen 8 Gew.% und 15 Gew.% Nickel, insbesondere bei 10% Gew.% Nickel liegt.

3. Verfahren nach einem der Ansprüche 1 oder 2, wobei der Chromgehalt des Ventilkörpers bevorzugt zwischen 5 Gew.% und 60 Gew.% Chrom, im Speziellen zwischen 10 Gew.% und 50 Gew.% Chrom, besonders bevorzugt zwischen 15 Gew.% und 45 Gew.% Chrom liegt, insbesondere bei 20% Chrom liegt.

4. Verfahren nach einem der vorangehenden Ansprüche, wobei der Ventilkörper zusätzlich mindestens zwischen 0.1 Gew.% und 0.4 Gew.% Kohlenstoff, zwischen 0.01 Gew.% und 0.06 Gew.% Phosphor und zwischen 0.01 Gew.% und 0.05 Gew.% enhält.

5. Verfahren nach einem der vorangehenden Ansprüche, wobei die Korrosionsschutzbeschichtung aus einer Nickellegierung umfassend mindestens Nickel und Chrom gebildet ist, wobei der Chromgehalt bevorzugt zwischen 10 Gew.% und 60 Gew.% Chrom, im Speziellen zwischen 15 Gew.% und 50 Gew.% Chrom, besonders bevorzugt zwischen 20 Gew.% und 45 Gew.% Chrom, insbesondere bei 43% liegt.

6. Verfahren nach einem der vorangehenden Ansprüche, wobei ein Eisengehalt der Korrosionsschutzbeschichtung kleiner als 5 Gew.%, bevorzugt zwischen 0.5 Gew.% und 4 Gew.%, im Speziellen kleiner als 3 Gew.% eingestellt wird.

7. Verfahren nach einem der vorangehenden Ansprüche, wobei als Schutzgas beim Metall-Schutzgasschweissverfahren eine Mischung aus einem Reaktivgas und einem Inertgas verwendet wird.

8. Verfahren nach Anspruch 7, wobei als Reaktivgas 0.5 Vol.% bis 10 Vol.% Wasserstoff, bevorzugt 1 Vol% bis 5 Vol.% Wasserstoff, insbesondere ca. 2 Vol.% Wasserstoff verwendet wird, als erstes Inertgas 5 Vol.% bis 60 Vol.% Helium, bevorzugt 20 Vol% bis 40 Vol.% Helium, insbesondere ca. 30 Vol.% Helium verwendet wird und als Rest zu 100 Vol.% Argon als zweites Inertgas verwendet wird.

9. Verfahren nach einem der vorangehenden Ansprüche, wobei das Metall-Schutzgasschweissverfahren ein gepulstes CMT Verfahren ist.

10. Verfahren nach einem der vorangehenden Ansprüche, wobei als Schweissdraht beim Metall-Schutzgasschweissverfahren ein Schweissdraht mit einem Drahtdurchmesser zwischen 1 mm und 2mm, bevorzugt ca. 1.2mm, bzw. 1.14mm verwendet wird.

11. Verfahren nach einem der vorangehenden Ansprüche, wobei die Korrosionsschutzbeschichtung als mindestens zweilagige Korrosionsschutzschicht umfassend eine erste Korrosionsschutzschicht und eine zweite Korrosionsschutzschicht aufgeschweisst wird.

12. Verfahren nach Anspruch 11, wobei die erste Korrosionsschutzschicht aus dem gleichen Material wie die zweite Korrosionsschutzschicht hergestellt wird.

13. Verfahren nach einem der vorangehenden Ansprüche, wobei in der Fussfläche des Ventiltellers eine Ausnehmung in Form einer ersten Beschichtungsmulde vorgesehen wird, in welcher eine Korrosionsschutzbeschichtung in Form einer ersten Korrosionsschutzschicht aufgeschweisst wird.

14. Verfahren nach Anspruch 13, wobei die Korrosionsschutzbeschichtung mindestens eine zweite Korrosionsschutzschicht und die zweite Korrosionsschutzschicht in einer zweiten Beschichtungsmulde vorgesehen wird.

15. Gaswechselventils hergestellt nach einem Verfahren der vorangehenden Ansprüche.
